# EUROPEAN PATENT SPECIFICATION

(11) **EP 2 285 597 B1**
(45) Date of publication and mention of the grant of the patent: **21.11.2018**
(21) Application number: 09749990.9
(22) Date of filing: 22.05.2009
(51) Int. Cl.: B60C 11/16

(54) **ANTI-SKID STUD AND VEHICLE TYRE**
ANTI-RUTSCH-NOPPEN UND FAHRZEUGREIFEN
CRAMPON ANTIDÉRAPANT ET PNEU DE VÉHICULE

(30) Priority: 23.05.2008 FI 20085491
(43) Date of publication of application: 23.02.2011
(73) Proprietor: Tikka Spikes Oy, 41160 Tikkakoski (FI)
(72) Inventor: RYYPPÖ, Miiro, FI-40800 Vaajakoski (FI)
(74) Representative: Helke, Kimmo Kalervo
(86) International application number: PCT/FI2009/050424
(87) International publication number: WO 2009/141506

(56) References cited:
- EP-A1- 1 199 193
- WO-A1-96/28310
- WO-A1-97/44205
- WO-A1-97/44205
- WO-A1-2005/002885
- CA-A1- 979 342
- DE-A1- 2 703 194
- DE-B1- 1 202 156
- DE-U- 1 850 309
- US-A- 4 838 329
- US-A1- 2007 095 448

## Description

The present invention relates to an anti-skid stud, which includes a body equipped with a base flange and a pin fitted inside the opposite end of the body located opposite to the base flange, the anti-skid stud further includes a sleeve fitted around the body, the sleeve being of a hard metal, or a material like a hard metal, and which anti-skid stud is intended to be installed into a tread of a vehicle tyre. The invention also relates to a vehicle tyre.

Anti-skid studs are used to increase friction particularly in vehicle tyres when driving on icy and snowy surfaces. In studded tyres, several anti-skid studs are installed around the tyre, on the tread of the tyre. An anti-skid stud includes a body and a hard-metal pin.

The body is usually cylindrical, or some other shape. In the body, there is a base flange, which prevents the anti-skid stud from detaching from the tread. At the opposite end of the body to the base flange, there is, in addition, a pin, which forms the gripping and wearing surface of the anti-skid stud. In practice, it is mostly only the pin that protrudes from the tread, and bites into the ice and snow. Because vehicle tyres are also used to drive on ice-free and hard surfaces, for example, on asphalt, the pin is generally manufactured from a hard metal, in order to achieved a sufficient wear resistance.

The pin, which has a diameter of only a few millimetres, creates a high surface pressure on the road surface. In other words, the pin bites effectively into ice and snow. However, on an ice-free road surface the wearing effect of the pin is a significant detriment. In other words, the road surface, such as asphalt, wears and generally becomes rutted. At the same time, the pin wears into a rounded shape, thus reducing the friction created on ice and snow. As the pin wears, the body of the anti-skid stud also wears. Thus, the service life of an anti-skid stud is short, compared to the service life of a tyre. As the body wears, the anti-skid stud also begins to tilt increasingly, which stresses the tread and generally finally leads to the anti-skid stud detaching.

Canadian patent number 979342 discloses a plastic body for an anti-skid stud, in which there is a metal jacket. The jacket is intended to reinforce the body and protect it from the wearing effect of sand that enters between the anti-skid stud and the tyre surrounding it. WO-publication number 2005/002885A1 discloses an anti-skid spike according the preamble of the Claim 1. WO-publication number 97/44205A1 and DE-publication number 2703194A1 disclose an anti-skid spike.

The invention is intended to create a new type of anti-skid stud, the friction properties of which are better than before, but the road surface-wearing effect of which is less than that of known studs. At the same time, the wear resistance of the anti-skid stud is better than before. The invention is also intended to create a new type of vehicle tyre, the grip and road-holding properties of which are better than before. The characteristic features of the anti-skid stud according to the present invention are stated in the accompanying Claim 1. Correspondingly, the characteristic features of the vehicle tyre according to the invention are stated in the accompanying Claim 12. In the anti-skid stud according to the invention, there are more grip surfaces than usual. Thus, firstly, the friction properties of the anti-skin stud are on a quite new level. In addition, there are more wear surfaces than usual in the anti-skid stud. Thus, the wear of the anti-skid stud is less than previously, which increases the service life of the anti-skid stud. If necessary, the anti-skid stud according to the invention can be manufactured to be lighter than previously, without its other properties deteriorating. The vehicle tyre according to the invention functions excellently on different types of road surface, without excessive wear unnecessarily wearing the road surface too.

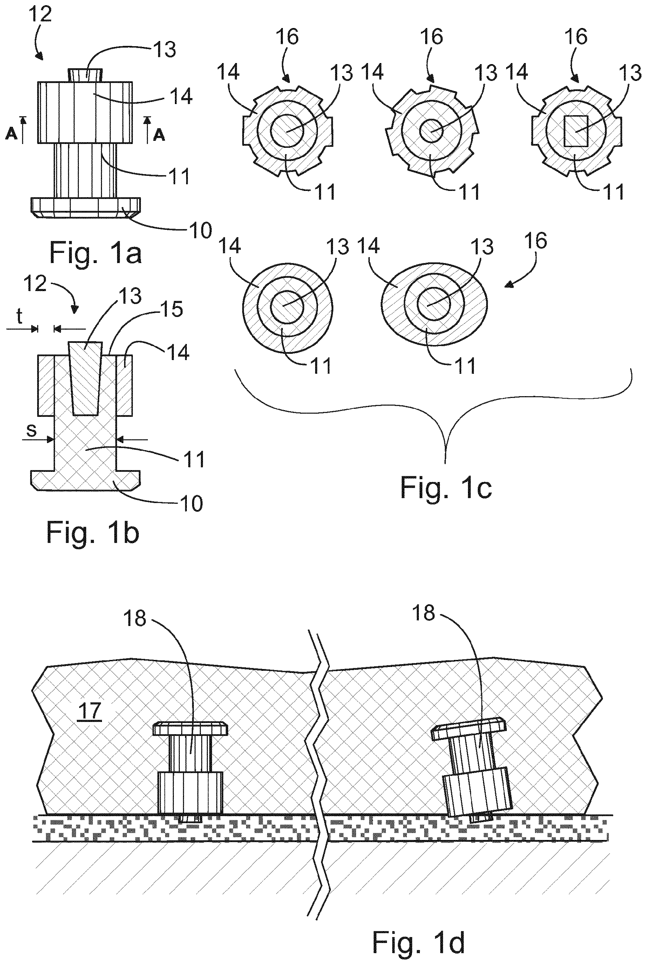

In the following, the invention is described in detail with reference to the accompanying drawings showing some embodiments of the invention, in which
- Figure 1a: shows a side view of one embodiment of the antiskid stud according to the invention,
- Figure 1b: shows a cross-section of the anti-skid stud of Figure 1a,
- Figure 1c: shows a cross-section of an example of embodiments of the anti-skid stud according to the invention, and
- Figure 1d: shows the anti-skid stud according to the invention, attached to a tyre, in various operating positions.

Figure 1a shows a side view of the anti-skid stud according to the invention. The anti-skid stud includes a body 11 equipped with a base flange 10. The shaping and material of the body can vary in different embodiments. The shape and even the position of the base flange too can very in different embodiments. There can also be several base flanges. However, the base flange seeks to preserve the position and attitude of the anti-skid stud on the tread. The anti-skid stud includes, in addition, a pin 13 fitted inside the opposite end 12 of the body located opposite to the base flange 10. The pin 13 is attached to the body, for example, by means of a friction joint, or by soldering. The pin forms the grip and wear surface of the anti-skid stud. According to the invention, the anti-skid stud further includes a sleeve 14 fitted around the body 11, in order to form a second grip surface in the anti-skid stud. The sleeve has several surprising characteristics. The sleeve also advantageously forms a second wear surface. In a normal situation, only the pin makes contact with the road surface (Figure 1d). The anti-skid stud then functions according to known anti-skid studs. In a skid situation, the anti-skid stud starts to turn, when the sleeve too grips the road surface, for example the ice layer. The edge of the sleeve then acts effectively as a grip surface. A turned anti-skid stud is shown at the right-hand side of Figure 1d. The intended use can be chosen by means of material selection. The sleeve is preferably
- Figure 1a: shows a side view of one embodiment of the antiskid stud according to the invention,
- Figure 1b: shows a cross-section of the anti-skid stud of Figure 1a,
- Figure 1c: shows a cross-section of an example of embodiments of the anti-skid stud according to the invention, and
- Figure 1d: shows the anti-skid stud according to the invention, attached to a tyre, in various operating positions.

Figure 1a shows a side view of the anti-skid stud according to the invention. The anti-skid stud includes a body 11 equipped with a base flange 10. The shaping and material of the body can vary in different embodiments. The shape and even the position of the base flange too can very in different embodiments. There can also be several base flanges. However, the base flange seeks to preserve the position and attitude of the anti-skid stud on the tread. The anti-skid stud includes, in addition, a pin 13 fitted inside the opposite end 12 of the body to the base flange 11. The pin 13 is attached to the body, for example, by means of a friction joint, or by soldering. The pin forms the grip and wear surface of the anti-skid stud. According to the invention, the anti-skid stud further includes a sleeve 14 fitted around the body 11, in order to form a second grip surface in the anti-skid stud. The sleeve has several surprising characteristics. The sleeve also advantageously forms a second wear surface. In a normal situation, only the pin makes contact with the road surface (Figure 1d). The anti-skid stud then functions according to known anti-skid studs. In a skid situation, the anti-skid stud starts to turn, when the sleeve too grips the road surface, for example the ice layer. The edge of the sleeve then acts effectively as a grip surface. A turned anti-skid stud is shown at the right-hand side of Figure 1d. The intended use can be chosen by means of material selection. The sleeve is preferably made from a wear-resistant made from a wear-resistant material, so that the sleeve will lengthen the service life of the anti-skid stud. A sufficiently hard material will also withstand use without becoming rounded, so that the friction properties of the anti-skid stud will remain good for as long as possible. In general, the sleeve and edges form either one additional grip surface or one additional wear surface for the anti-skid stud. In the most advantageous case, the grip and wear surfaces are formed simultaneously. In different embodiments, the grip and/or wear surfaces can vary in shape and number.

In one embodiment, the pin is the primary grip and wear surface in the anti-skid stud while the sleeve functions only when the anti-skid stud turns. Thus, the upper surface 15 of the sleeve 14 is essentially on the same level as the said end 12 (Figure 1b). In other words, the upper surface 15 of the sleeve 14 on the pin 13 side is essentially on the same level as the opposite end 12 of the body 11 to the base flange 10. The sleeve is then sufficiently far from the upper surface of the pin and thus does not touch the road surface during normal driving. On the other hand, the sleeve will protect the body right up to its upper surface when the anti-skid stud turns in a skid situation. At the same time, it is possible to manufacture the body of a softer and lighter material than conventionally. In other words, the material of the sleeve 14 is harder than the material of the body 11. According to the invention, the sleeve is manufactured from a hard metal, or from a material similar to hard metal. According to the invention, the Vickers hardness of the material of the sleeve is at least 1200. Thus, the edges of the sleeve will remain sharp, so that the grip properties of the sleeve remain good for a long time. A softer metal than this would become rounded rapidly, so that it would loose its grip properties rapidly. Because the sleeve for its part also forms a wear surface, the material of the body can be selected more freely than before. According to the invention, the body 11 can be of a plastic or composite material. The anti-skid stud will then be lighter than before. For example, the body can be made entirely of plastic, in which case the pin and sleeve will be the only metal components. The weight will then be clearly less than the limits set by regulations. The body can also be manufactured from a ferrous or non-ferrous metal, for example, aluminium.

Figure 1c shows various cross-sections for the anti-skid stud. The sleeve can be completely cylindrical, but there is preferably at least one radial protrusion 16 in the cross-section of the sleeve 14. Unrivalled friction properties will then be created in the anti-skid stud. In the examples of shaping, the cross-sections of the sleeve are special, so that points are created, which bite effectively into ice. In order to create the best friction effect, there are several radial protrusions, which are arranged symmetrically around the circumference of the sleeve. At the same time, the anti-skid stud can be fitted to the tyre in any position whatever. On the other hand, by making the sleeve asymmetrical, the friction properties created by the anti-skid stud can be aligned as desired. For example, some of the anti-skid studs can be aligned to maximize the longitudinal grip of the tyre when the other anti-skid studs increase transverse grip. The shape of the cross-sections of the body and pin, as well as of the base flange can vary in different embodiments.

The sleeve can be attached to the body in different ways. The manner of attachment depends to a great extent on the material selection. There is preferably a friction-locked joint between the body 11 and the sleeve 14. Thus, for example, a hard-metal sleeve can be attached on top of a plastic body. If necessary, the shape of the body can be exploited to hold the sleeve in place. For example, the body can be moulded from a plastic material with the sleeve acting as the mould. Instead of, or as well as a friction-locked joint, the joint can be implemented by some other means. For example, the sleeve can be brazed, or even glued.

The wear of the anti-skid stud can be adjusted by means of dimensioning and the choice of materials. The anti-skid stud preferably wears at the same rate as the tyre, when the friction properties and stud retention properties will be at their best. As the pin wears, the sleeve and body also wear. In a second embodiment, the sleeve is the primary grip and wear surface in the anti-skid stud, with the pin acting as a trigger pin. In other words, the pin is arranged to be a secondary grip and/or wear surface. In that case, a pin that is smaller but harder than before is used, which at the same time presses more easily than before into the road surface. The diameter of the pin can be made even half of that in known studs. In a skid situation, the trigger pin that has pressed on the road surface tilts the anti-skid stud, causing the sleeve to bite effectively into the road surface, especially into ice. When the pin is made smaller, the wear effect of the anti-skid stud is also reduced.

The dimensioning of the sleeve naturally depends on the dimensions of the body. However, a new and surprising grip and wear property is achieved by means of a relatively thin sleeve. According to the invention, the wall thickness t of the sleeve 14 is less than half the diameter s of the web of the body 11. By reducing the wall thickness, the sleeve remains as it were sharp, while the rate of wear also increases. On the other hand, when using shaping the wall thickness can be increased, in order to increase the wear resistance.

Figure 1d shows part of the tread 17 of a vehicle tyre. The tread is the outermost part of a vehicle tyre, in which there are, for instance, water grooves and ribs, as well as blind holes for vehicle studs (not shown). There are tens of anti-skid studs in a vehicle tyre, at least some of which are anti-skid studs 18 according to the invention. Such a vehicle tyre will have a good hold on ice and snow. In addition, the vehicle tyre will retain its properties, despite the wear of the wear surface and anti-skid stud. In Figure 1d, there is a thin layer of ice between the road surface and the vehicle tyre, into which the pin and sleeve bite. By means of the anti-skid stud according to the invention, wear of the road surface is reduced, but grip and road-holding properties are nevertheless improved. In addition, the anti-skid studs 18 are fitted to the tread 17, in such a way that in a skid situation the pin 13 tilts the anti-skid stud 18, so that the sleeve 14 forms a second grip surface.

## Claims

1. Anti-skid stud (18), which includes a body (11) equipped with a base flange (10) and a pin (13) fitted inside the opposite end (12) of the body (11) located opposite to the base flange (10), the anti-skid stud (18) further includes a sleeve (14) fitted around the body (11), the sleeve (14) being of a hard metal, or a material like a hard metal, and which anti-skid stud (18) is intended to be installed into a tread (17) of a vehicle tyre, **characterized in that** the pin (13) is arranged to be a secondary grip and/or wear surface and **in that** the pin (13) protrudes from the body (11) further than the sleeve (14), and when installed to the tread (17), the upper surface (15) of the sleeve (14) is at most equal to the surface of the tread (17), and the pin (13) is arranged to act as a trigger pin in a skid situation for tilting the anti-skid stud (18) for the sleeve (14) becoming the primary grip and wear surface of the anti-skid stud (18).

2. Anti-skid stud (18) according to Claim 1, **characterized in that** the upper surface (15) of the sleeve (14) on the side next to the pin (13) is essentially at the same level as the opposite end (12) of the body (11) located opposite to the base flange (10).

3. Anti-skid stud (18) according to Claims 1 or 2, **characterized in that** the material of the sleeve (14) is harder than the material of the body (11).

4. Anti-skid stud (18) according to any of Claims 1 - 3, **characterized in that** there is at least one radial protrusion (16) in a cross-section A-A of the sleeve (14).

5. Anti-skid stud (18) according to Claim 4, **characterized in that** there are several radial protrusions (16) and they are fitted symmetrically on the circumference of the sleeve (14) .

6. Anti-skid stud (18) according to any of Claims 1 - 5, **characterized in that** the body (11) is of a ferrous or non-ferrous metal.

7. Anti-skid stud (18) according to any of Claims 1 - 5, **characterized in that** the body (11) is of a plastic or composite material.

8. Anti-skid stud (18) according to any of Claims 1 - 7, **characterized in that** between the body (11) and the sleeve (14) there is a friction-locked joint and/or a joint implemented using some other means.

9. Anti-skid stud (18) according to any of Claims 1 - 8, **characterized in that** the wall thickness t of the sleeve (14) is less than half of the diameter s of the web of the body (11) .

10. Anti-skid stud (18) according to any of Claims 1 - 9, **characterized in that** the cross-section of the sleeve (14) differs from a hollow cylindrical shape.

11. Anti-skid stud (18) according to any of Claims 1 - 10, **characterized in that** the Vickers hardness of the material of the sleeve (14) is at least 1200.

12. Vehicle tyre, in which a plurality of anti-skid studs are arranged in its tread (17), that at least some of the anti-skid studs are anti-skid studs (18), which include a body (11) equipped with a base flange (10) and a pin (13) fitted inside the opposite end (12) of the body located opposite to the base flange (10), the anti-skid stud (18) further includes a sleeve (14) fitted around the body (11), the sleeve (14) being of a hard metal, or a material like a hard metal, **characterized in that** the pin (13) is arranged to be a secondary grip and/or wear surface and **in that** the pin (13) protrudes from the body (11) further than the sleeve (14), and **in that** the upper surface (15) of the sleeve (14) is at most equal to the surface of the tread (17), and **in that** the pin (13) is arranged to act as a trigger pin in a skid situation for tilting the anti-skid stud (18) for the sleeve (14) becoming the primary grip and wear surface of the anti-skid stud (18).

13. Vehicle tyre according to Claim 12, **characterized in** the anti-skid studs (18) are anti-skid studs (18) according to any one of Claims 2 - 11.

14. Vehicle tyre according to Claim 12 or 13, **characterized in that**, in the vehicle tyre, anti-skid studs (18) are used, the sleeves (14) of which are asymmetrical and the anti-skid studs (18) are positioned in such a way that the sleeves one set of anti-skid studs (18) is aligned in the longitudinal direction of the vehicle tyre while the sleeves of the other set of anti-skid studs (18) is aligned in the lateral direction of the vehicle tyre.

## Patentansprüche

1. Gleitschutz-Spike (18), der einen Körper (11) umfasst, der mit einem Bodenflansch (10) und einem Zylinderstift (13) ausgestattet ist, der innerhalb des dem Bodenflansch (10) gegenüberliegenden Endes (12) des Körpers (11) angebracht ist, wobei der Gleitschutz-Spike (18) ferner eine Hülse (14) umfasst, die um den Körper (11) angebracht ist, wobei die Hülse (14) aus einem Hartmetall oder einem Material wie einem Hartmetall besteht, und der Gleitschutz-Spike (18) dazu bestimmt ist, in eine Lauffläche (17) eines Fahrzeugreifens eingebaut zu werden, **dadurch gekennzeichnet, dass** der Zylinderstift (13) als sekundäre Griff- und/oder Verschleißfläche angeordnet ist und dass der Zylinderstift (13) aus dem Körper (11) weiter als die Hülse (14) herausragt und wenn er an der Lauffläche (17) angebracht ist, die Oberseite (15) der Hülse (14) höchstens eben mit der Oberfläche der Lauffläche (17) ist, und der Zylinderstift (13) so angeordnet ist, dass er als Auslösestift in einer Gleitschutzsituation zum Kippen des Gleitschutz-Spikes (18) führt und die Hülse (14) zur primären Griff- und Verschleißfläche des Gleitschutz-Spikes (18) wird.

2. Gleitschutz-Spike (18) gemäß Patentanspruch 1, **dadurch gekennzeichnet, dass** die Oberseite (15) der Hülse (14) auf der Seite neben dem Zylinderstift (13) im Wesentlichen auf gleicher Höhe wie das dem Bodenflansch (10) gegenüberliegende Ende (12) des Körpers (11) liegt.

3. Gleitschutz-Spike (18) gemäß den Patentansprüchen 1 oder 2, **dadurch gekennzeichnet, dass** das Material der Hülse (14) härter ist als das Material des Körpers (11).

4. Gleitschutz-Spike (18) gemäß einem der Patentansprüche 1 - 3, **dadurch gekennzeichnet, dass** mindestens ein radialer Überstand (16) in einem Querschnitt A-A der Hülse (14) vorhanden ist.

5. Gleitschutz-Spike (18) gemäß Patentanspruch 4 **dadurch gekennzeichnet, dass** es mehrere radiale Überstände (16) gibt und diese symmetrisch am Umfang der Hülse (14) angebracht sind.

6. Gleitschutz-Spike (18) gemäß einem der Patentansprüche 1 - 5, **dadurch gekennzeichnet, dass** der Körper (11) aus einem Eisen- oder Nichteisenmetall besteht.

7. Gleitschutz-Spike (18) gemäß einem der Patentansprüche 1 - 5, **dadurch gekennzeichnet, dass** der Körper (11) aus einem Kunststoff oder Verbundwerkstoff besteht.

8. Gleitschutz-Spike (18) gemäß einem der Patentansprüche 1 - 7, **dadurch gekennzeichnet, dass** zwischen dem Körper (11) und der Hülse (14) eine kraftschlüssige Verbindung und/oder eine Verbindung mit anderen Mitteln ausgeführt ist.

9. Gleitschutz-Spike (18) gemäß einem der Patentansprüche 1 - 8, **dadurch gekennzeichnet, dass** die Wanddicke t der Hülse (14) weniger als die Hälfte des Durchmessers s des Steges des Körpers (11) beträgt.

10. Gleitschutz-Spike (18) gemäß einem der Patentansprüche 1 - 9, **dadurch gekennzeichnet, dass** sich der Querschnitt der Hülse (14) von einer hohlzylindrischen Form unterscheidet.

11. Gleitschutz-Spike (18) gemäß einem der Patentansprüche 1 - 10, **dadurch gekennzeichnet, dass** die Vickershärte des Materials der Hülse (14) mindestens 1200 beträgt.

12. Fahrzeugreifen, auf dem eine Vielzahl von Gleitschutz-Spikes in seiner Lauffläche (17) so angeordnet sind, dass zumindest ein Teil der Gleitschutz-Spikes Gleitschutz-Spikes (18) sind, die einen Körper (11) umfassen, der mit einem Bodenflansch (10) und einem Zylinderstift (13) ausgestattet ist, der innerhalb des dem Bodenflansch (10) gegenüberliegenden Endes (12) des Körpers angebracht ist, wobei der Gleitschutz-Spike (18) ferner eine Hülse (14) umfasst, die um den Körper (11) angebracht ist, wobei die Hülse (14) aus einem Hartmetall oder einem Material wie einem Hartmetall besteht, **dadurch gekennzeichnet, dass** der Zylinderstift (13) als sekundäre Griff- und/oder Verschleißfläche angeordnet ist und dass der Zylinderstift (13) aus dem Körper (11) weiter als die Hülse (14) herausragt und die Oberseite (15) der Hülse (14) höchstens eben mit der Oberfläche der Lauffläche (17) ist, und der Zylinderstift (13) so angeordnet ist, dass er als Auslösestift in einer Gleitschutzsituation zum Kippen des Gleitschutz-Spikes (18) führt und die Hülse (14) zur primären Griff- und Verschleißfläche des Gleitschutz-Spikes (18) wird.

13. Fahrzeugreifen gemäß dem Patentanspruch 12, **dadurch gekennzeichnet, dass** die Gleitschutz-Spikes (18) Gleitschutz-Spikes (18) gemäß einem der Patentansprüche 2 - 11 sind.

14. Fahrzeugreifen gemäß den Patentansprüchen 12 oder 13, **dadurch gekennzeichnet, dass** im Fahrzeugreifen Gleitschutz-Spikes (18) verwendet werden, deren Hülsen (14) asymmetrisch sind und deren Gleitschutz-Spikes (18) so positioniert sind, dass die Hülsen eines Satzes von Gleitschutz-Spikes (18) in Längsrichtung des Fahrzeugreifens ausgerichtet sind, während die Hülsen des anderen Satzes von Gleitschutz-Spikes (18) in Querrichtung des Fahrzeugreifens ausgerichtet sind.

## Revendications

1. Crampon antidérapant (18), qui comprend un corps (11) équipé d'une base à bride (10) et une mise (13) agencée à l'intérieur de l'extrémité opposée (12) du corps (11) située à l'opposé de la base à bride (10), le crampon antidérapant (18) comprend en outre un fourreau (14) disposé autour du corps (11), le fourreau (14) étant du métal dur ou d'un matériau semblable à un métal dur, et lequel crampon antidérapant (18) est destiné à être installé dans la bande de roulement (17) d'un pneu de véhicule, **caractérisé en ce que** la mise (13) est disposée de sorte à être une surface de préhension et/ou d'usure secondaire et **en ce que** la mise (13) fait d'avantage saillie du corps (11) que le fourreau (14), et quand installé dans la bande de roulement (17), la surface supérieure (15) du fourreau (14) est tout au plus au même niveau que la surface de la bande de roulement (17), et la mise (13) est disposée de sorte à agir en tant que déclencheur dans une situation de dérapage pour incliner le crampon antidérapant (18) pour que le fourreau (14) devienne la surface de préhension et d'usure principale du crampon antidérapant (18).

2. Crampon antidérapant (18) selon la revendication 1, **caractérisé en ce que** la surface supérieure (15) du fourreau (14) du côté de la mise (13) est essentiellement au même niveau que l'extrémité opposée (12) du corps (11) située à l'opposé de la base à bride (10).

3. Crampon antidérapant (18) selon la revendication 1 ou 2, **caractérisé en ce que** le matériau du fourreau (14) est plus dur que le matériau du corps (11).

4. Crampon antidérapant (18) selon l'une quelconque des revendications 1 à 3, **caractérisé en ce qu'**il y a au moins une saillie radiale (16) dans la coupe transversale A-A du fourreau (14).

5. Crampon antidérapant (18) selon la revendication 4, **caractérisé en ce qu'**il y a plusieurs saillies radiales (16) et qu'elles sont disposées symétriquement sur la circonférence du fourreau (14).

6. Crampon antidérapant (18) selon l'une quelconque des revendications 1 à 5, **caractérisé en ce que** le corps (11) est du métal ferreux ou non ferreux.

7. Crampon antidérapant (18) selon l'une quelconque des revendications 1 à 5, **caractérisé en ce que** le corps (11) est du plastique ou du matériau composite.

8. Crampon antidérapant (18) selon l'une quelconque des revendications 1 à 7, **caractérisé en ce que** la jonction entre le corps (11) et le fourreau (14) est verrouillée par friction et/ou réalisée par un autre moyen.

9. Crampon antidérapant (18) selon l'une quelconque des revendications 1 à 8, **caractérisé en ce que** l'épaisseur de paroi t du fourreau (14) est moins de la moitié du diamètre s de l'âme du corps (11).

10. Crampon antidérapant (18) selon l'une quelconque des revendications 1 à 9, **caractérisé en ce que** la coupe transversale du fourreau (14) diffère d'une forme cylindrique creuse.

11. Crampon antidérapant (18) selon l'une quelconque des revendications 1 à 10, **caractérisé en ce que** la dureté de Vickers du matériau du fourreau (14) est au moins 1200.

12. Pneu de véhicule, dans la bande de roulement (17) duquel de nombreux crampons antidérapants sont disposés, et qu'au moins une partie des crampons antidérapants sont des crampons antidérapants (18), qui comprennent un corps (11) équipé d'une base à bride (10) et une mise (13) agencée à l'intérieur de l'extrémité opposée (12) du corps située à l'opposé de la base à bride (10), le crampon antidérapant (18) comprend en outre un fourreau (14) disposé autour du corps (11), le fourreau (14) étant du métal dur ou d'un matériau semblable à un métal dur, **caractérisé en ce que** la mise (13) est disposée de sorte à être une surface de préhension et/ou d'usure secondaire et **en ce que** la mise (13) fait d'avantage saillie du corps (11) que le fourreau (14), et **en ce que** la surface supérieure (15) du fourreau (14) est tout au plus au même niveau que la surface de la bande de roulement (17), et **en ce que** la mise (13) est disposée de sorte à agir en tant que déclencheur dans une situation de dérapage pour incliner le crampon antidérapant (18) pour que le fourreau (14) devienne la surface de préhension et d'usure principale du crampon antidérapant (18).

13. Pneu de véhicule selon la revendication 12, **caractérisé en ce que** les crampons antidérapants (18) sont des crampons antidérapants (18) selon l'une quelconque des revendications 2 à 11.

14. Pneu de véhicule selon la revendication 12 ou 13, **caractérisé en ce que** dans le pneu de véhicule des crampons antidérapants (18) sont utilisés, les fourreaux (14) desquels sont asymétriques et les crampons antidérapants (18) sont positionnés de sorte que les fourreaux d'un jeu de crampons antidérapants (18) sont alignés dans la direction longitudinale du pneu de véhicule tandis que les fourreaux de l'autre jeu de crampons antidérapants (18) sont alignés dans la direction latérale du pneu de véhicule.
